# EUROPEAN PATENT APPLICATION

(11) **EP 0 703 273 A2**
(43) Date of publication of application: **27.03.1996**
(21) Application number: 95306568.7
(22) Date of filing: 18.09.1995
(51) Int. Cl.: C08L 23/10, C08L 65/02

(54) **Filled blends of polyphenylene ether/polypropylene**

(30) Priority: 26.09.1994 US 312357
(71) Applicant: GENERAL ELECTRIC COMPANY, Schenectady, NY 12345 (US)
(72) Inventor: Lee, Gim Fun, Jr., Albany, New York 12203 (US)
(74) Representative: Szary, Anne Catherine

(57) **Abstract**

A filled polypropylene composition is provided which comprises a crystalline polypropylene resin, an amorphous polyphenylene ether resin and a reinforcing filler. The reinforcing filler is preferably glass fibers. The composition preferably further comprises a flame retardant and a flame retardant synergist. The compositions exhibit enhanced heat distortion temperatures and various enhanced mechanical properties and in flame retardant compositions exhibit enhanced flame retardancy over simple glass filled polypropylene compositions. The compositions are useful for making molded articles.

## Description

The invention relates to filled polypropylene compositions, and more particularly relates to filled polypropylene/polyphenylene ether blend compositions.

### Description of the Related Art

Filled polypropylene compositions are generally known. There is a desire to provide glass filled polypropylene compositions exhibiting higher heat distortion temperatures, tensile yields, tensile strength, flex modulus and flexural strength. Accordingly, there is a need to provide filled polypropylene compositions which exhibit enhanced heat distortion temperature, tensile yield, tensile strength, flexural modulus and flexural strength.

### SUMMARY OF THE INVENTION

The present invention involves thermoplastic compositions comprising polypropylene resin. polyphenylene ether resin and reinforcing filler. The composition exhibit enhanced heat distortion temperature, tensile yield, tensile strength, flexural modulus and flexural strength.

### Detailed Description of the Invention

The compositions of the present invention comprise (a) polypropylene resin, (b) polyphenylene ether resin and (c) reinforcing filler. The compositions preferably further comprise (d) a flame retardant. The compositions exhibit enhanced mechanical properties, for example, heat distortion temperature.

The polypropylene resins are crystalline polypropylene resins, which are homopolymers or copolymers of propylene, comprising at least 50 percent by weight propylene monomer. Suitable comonomers include alpha-monoolefins containing 2 to 8 carbon atoms, such as ethylene-propylene copolymers and ethylene-propylene terpolymers containing less than 10 percent by weight of 1 or more monomers containing multiple unsaturation. Preferably the polypropylene utilized is a homopolymer of propylene.

The preferred polyphenylene ethers are homo- and copolymers of the formula: 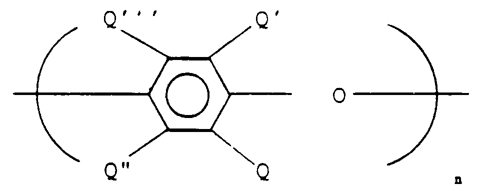
wherein Q, Q', Q'' and Q''', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q'' and Q''' in addition may be halogen with the proviso that Q and Q' are preferably free of a tertiary carbon atom; and n represents the total number of monomer residues and is an integer of at least 50.

Especially preferred is poly(2,6-dimethyl-1,4-phenylene)ether. Suitable polyphenylene ethers and their methods for preparation are described in U.S. Patent Nos. 3,306,874 and 3,306,875 to Allen Hay and U.S. Patent Nos. 3,257,357 and 3,257,358 to Gelu Stamatoff, all of which are included herein by reference.

Suitable reinforcing fillers include, for example, glass fibers, carbon fibers, ceramic fibers (e.g. alumina fibers), aramide fibers, wholly aromatic polyester fibers, metallic fibers, potassium titanate whisker. Examples of suitable inorganic fillers include calcium carbonate, mica, talc, silica, barium sulfate, calcium sulfate. kaolin, clay, pyroferrite, bentonite, sericite, zeolites, nepheline syenite, wollastonite, ferrites, calcium silicate, magnesium carbonate, dolomite, antimony trioxide. zinc oxide, titanium oxide, magnesium oxide, iron oxides, molybdenum disulfide, graphite, gypsum, glass beads, powdered glass, glass balloons, quartz, quartz glass, and mixtures thereof. Preferably the reinforcing filler is a glass fiber. Suitable reinforcing fillers may be broadly termed reinforcing agents. and preferably are fiberous (filamentous) glass. Fillers can be untreated or treated with silane or titanate cuppling agents. Suitable fibrous glass filaments include lime-aluminum borosilicate glass that is relatively sodium free, also referred to as "E" glass. The filaments may be made by standard processes, by steam or air blowing, flame blowing and mechanical pulling. Preferred filaments are made by mechanical pulling. Suitable filament diameters range from about 0.00012 to 0.00075 inch, for example. Suitable filament is glass may be in the form of chopped strands of about 1/8th to about 2 inches long, or even shorter lengths due to compounding, resulting in filament lengths of between 0.0005 and 0.250 inch in final molded articles.

The glass reinforcement is a compound of glass filaments or fibers. Preferably, they are comprised of lime-aluminum borosilicate glass, and especially glass having a low soda content.

In preparing formulations in accordance with this invention, it is convenient, though not necessary, to use the filamentous glass in the form of chopped strands of from about one-eighth to about 2 inches long, although even shorter lengths might be more advantageous for same applications. Care should be taken not to employ too many strands which are very long or very short.

Most preferred for this invention are glass fibers or filaments characterized by an average diameter of from about 0.0004 to about 0.001 inch and an average length from about 1/32 to about 1/4 inch.

Suitable flame retardants include aromatic halogenated and aliphatic halogenated compounds, such as an oligomer or polymer having an aromatic bromocompound or an aromatic bromocompound structure. For example, suitable flame retardant compounds include decabromodiphenyl, hexabromobenzene, decabromodiphenylether, tetrabromobisphenyl A, tetrabromobisphenyl A polycarbonate or tetrabromobisphenyl A oligomer, poly(tetrabromobisphenyl A-terephthalate), or a polymeric reaction product of tetrabromobisphenyl A and epichlorohydrine. Synergist for flame retardants may also be employed, include, for example, antimony oxide, antimony oxide/zircomium oxide, and antimony oxide.

The filled polypropylene blend compositions preferably comprise the crystalline polypropylene resin, the amorphous polyphenylene ether resin and the reinforcing filler in the following amounts based on 100 parts by weight for the combined amount of polypropylene resin, polyphenylene ether resin and reinforcing filler: the polypropylene resin is preferably present in an amount of from 30 to 70 parts by weight based on the combined total weight of 100 parts by weight of polypropylene resin, polyphenylene ether resin and reinforcing filler, more preferably from 35 to 65 parts by weight thereof, most preferably from 40 to 60 parts by weight thereof; the polyphenylene ether resin is preferably present in an amount of from 15 to 70 parts by weight based on 100 parts by weight of a combined total weight of polypropylene resin, polyphenylene ether resin and reinforcing filler; more preferably from 25 to 55 parts by weight thereof and most preferably from 30 to 50 parts by weight thereof; and the reinforcing filler is preferably present at a level of from 5 to 45 parts by weight based on 100 parts by weight of a combined total weight of polypropylene resin, polyphenylene ether resin and reinforcing filler; more preferably from 5 to 15 percent by weight thereof; and more preferably from 8 to 12 percent by weight thereof. The polypropylene resin, polyphenylene resin and reinforcing filler are preferably present in the composition at a combined level of at least 70 percent by weight based on the total weight of the composition. The polypropylene resin and polyphenylene ether resin are preferably present in the composition in their respective weight ratios of between 2:1 to 0.7:1, more preferably from 1.5:1 to 0.8:1,more preferably from 1.4:1 to 1.1:1.

The polypropylene resin is preferably present in the composition at a level of from 15 to 65 percent by weight based on the total weight of the composition, more preferably from 20 to 60 percent by weight thereof, and most preferably from 30 to 50 percent by weight thereof. The polyphenylene ether resin is preferably present in the composition at a level of from 15 to 65 percent by weight based on the total weight of the composition, more preferably from 20 to 60 percent by weight thereof, and most preferably from 30 to 50 percent by weight thereof. The reinforcing fillers are preferably present in the composition at a level of from 5 to 40 percent by weight based on the total weight of the composition, more preferably from 8 to 35 percent by weight thereof, and most preferably from 16 to 20 percent by weight thereof. The flame retardants are preferably present in the composition at a level of from 1 to 30 percent by weight based on the total weight of the composition, more preferably from 5 to 25 percent by weight thereof, and most preferably from 10 to 20 percent by weight thereof. Optionally, the composition may be free of flame retardants. Flame retardant synergists such as antimony oxide may be incorporated into the composition as a preblended masterbatch comprising from 1 to 80 percent synergist and from 20 to 99 percent of a thermoplastic such as Nylon 6 polyamide (more specifically, for example, 70 percent antimony oxide and 30 percent Nylon 6 polyamide). Synergists may be present in the composition at a level of from 0.1 to 5 percent by weight, for example. The composition may utilize a preblend concentrate (masterbatch) in amounts of, for example, 1 to 20 percent by weight based on the total weight of the composition, 3 to 15 percent by weight of the composition, and 4 to 7 percent by weight of the composition.

The polypropylene in the following examples was obtained from Shell Chemical Company and designated as Shell Polypropylene 7129. The polyphenylene ether was PPO® resin by General Electric Company. The glass fibers were CertainTeed C.T. 93A. The brominated flame retardant was Pyrochek 68PB by Ferro Corp. The antimony oxide concentration used was 70 percent antimony oxide and 30 percent polyamide.

Comparative Example A was a composition of 100 percent polypropylene. Comparative Example B was a composition of 90 percent polypropylene and 10 percent glass fibers. Comparative Example C was a composition of 80 percent polypropylene and 20 percent polyphenylene ether. Example 1 was a composition of 60 percent by weight polypropylene, 30 percent by weight polyphenylene ether and 10 percent by weight glass fibers based on the total weight of the composition. Example 2 was a composition of 40 percent by weight polypropylene, 50 percent polyphenylene ether resin by weight and 10 percent glass fibers based on the total weight of the composition. Comparative Example D was a composition comprising 60 percent by weight polypropylene resin, 20 percent by weight glass fibers, 16 percent by weight brominated flame retardant and 5.7 percent by weight antimony oxide concentrate (preblend/masterbatch) Example 3 contained 50 percent by weight polypropylene resin, 10 percent by weight polyphenylene ether resin, 20 percent by weight glass fiber, 16 percent by weight brominated flame retardant and 5.7 percent antimony oxide concentrate. Example 4 contained 40 percent by weight polypropylene, 20 percent by weight polyphenylene ether, 20 percent by weight glass fiber, 16 percent by weight brominated flame retardant and 5.7 percent by weight antimony oxide concentrate. Example 5 contained 30 percent by weight polypropylene, 30 percent by weight polyphenylene ether, 20 percent by weight glass fiber, 16 percent by weight brominated flame retardant and 5.7 percent by weight antimony oxide concentrate. HDT is heat distortion temperature in degrees F measured at 264 pounds per square inch. TY is tensile yield in KPSI. TS is tensile strength in KPSI. FM is flexural modulus in KPSI. FS is flexural strength in KPSI. UL 94 is based on 1/16th inch test pieces wherein F stands for failure VO is the best rating, and V1 is the next best rating, and the numbers adjacent the ratings are the time periods in seconds to self extinguishing.

**TABLE 1**

| | A | B | C | 1 | 2 |
|---|---|---|---|---|---|
| HDT | 111 | 155 | 145 | 254 | 288 |
| TY | 3.5 | 4.2 | 3.9 | 5.2 | 7.0 |
| TS | 3.0 | 2.9 | 1.4 | 5.2 | 7.0 |
| FM | 143 | 213 | 158 | 320 | 394 |
| FS | 4.0 | 5.0 | 4.8 | 8.2 | 11.0 |

**TABLE 2**

| | D | 3 | 4 | 5 |
|---|---|---|---|---|
| HDT | 291 | 309 | 320 | 335 |
| TS | 4.0 | 4.2 | 4.6 | 5.9 |
| FM | 546 | 629 | 708 | 762 |
| UL-94 | F;>60 | F;38 | V1:10.8 | VO;4.2 |

As is illustrated by the compositions of the present invention, the compositions exhibited enhanced heat distortion temperatures and superior mechanical properties over the comparative examples.

## Claims

1. A composition comprising:
(a) A crystalline polypropylene resin,
(b) An amorphous polyphenylene ether resin, and
(c) reinforcing fillers, said polypropylene resin being present in an amount of 30 to 70 parts by weight based on 100 parts by weight of combined polypropylene resin, polyphenylene ether resin and reinforcing fillers, said polyphenylene ether resin being present in an amount of 10 to 75 parts by weight based on 100 parts by weight of combined parts of polypropylene resin, polyphenylene ether resin and reinforcing fillers, said reinforcing fillers being present in an amount of from 5 to 45 parts by weight based on 100 parts by weight combined amount of polypropylene resin, polyphenylene ether resin and reinforcing fillers.

2. The composition of Claim 1 wherein said polypropylene resin, said polyphenylene ether resin and said reinforcing fillers are present in said composition at a combined level of at least 70 percent by weight based on the total weight of the composition.

3. The composition of Claim 1 wherein said composition further comprises a flame retardant.

4. A composition comprising:
(a) a crystalline polypropylene resin present at a level of from 15 to 65 percent by weight based on the total weight of the composition;
(b) an amorphous polyphenylene ether resin present at a level of from 15 to 65 percent by weight based on the total weight of the composition;
(c) glass fibers present at a level of from 5 to 40 percent by weight based on the total weight of the composition; and
(d) a brominated flame retardant present at a level of from 5 to 25 percent by weight based on the total weight of the composition.

5. The composition of Claim 4 wherein said composition consists essentially of said polypropylene resin, said polyphenylene ether resin, said glass fibers, and said brominated flame retardant and a flame retardant synergist.

6. The composition of Claim 4 wherein said polypropylene and said polyphenylene ether are in a respective weight ratio of between 0.7:1 and 2.0:1.

7. The composition of Claim 1 wherein said polyphenylene ether resin is present at a level of from 15 to 65 percent by weight based on the total weight of the composition.

8. The composition of Claim 1, wherein the heat distortion temperature of said composition is greater than about 240°F measured at 264 psi.

9. The composition of Claim 8, wherein the heat distortion temperature of said composition is greater than about 280°F measured at 264 psi.

10. The composition of Claim 9 wherein the heat distortion temperature of said composition is greater than about 300°F measured at 264 psi.

11. The composition of any preceding claim, wherein the tensile strength of said composition is greater than about 4.5 KPSI and said flexural modulus is greater than about 300 KPSI.
